# EUROPEAN PATENT SPECIFICATION

(11) **EP 3 725 555 B1**
(45) Date of publication and mention of the grant of the patent: **21.02.2024**
(21) Application number: 18888347.4
(22) Date of filing: 10.12.2018
(51) Int. Cl.: B60C 11/13, B60C 11/00, B60C 11/03, B60C 11/12, B60C 11/04, B60C 19/00

(54) **PNEUMATIC TIRE**
LUFTREIFEN
PNEUMATIQUE

(30) Priority: 13.12.2017 JP 2017239024
(43) Date of publication of application: 21.10.2020
(73) Proprietor: Bridgestone Corporation, Chuo-Ku Tokyo 104-8340 (JP)
(72) Inventor: TOMIDA, Tatsuya, Tokyo 104-8340 (JP)
(74) Representative: Marks & Clerk LLP
(86) International application number: PCT/JP2018/045346
(87) International publication number: WO 2019/117090

(56) References cited:
- EP-A1- 0 625 436
- JP-A- 2007 269 144
- JP-A- 2010 280 266
- JP-A- 2011 509 213
- JP-A- 2013 086 683
- JP-A- 2013 086 683
- JP-A- 2013 126 842
- JP-A- 2013 539 735
- JP-A- 2015 214 303
- JP-A- 2017 185 889

## Description

### TECHNICAL FIELD

The present invention relates to a pneumatic tire.

### BACKGROUND

In a pneumatic tire, it is required to reduce noise during vehicle running and improve quietness. To meet the requirement, various tires have been suggested in which vehicle exterior noise such as air column resonance sound (often observed in a range from about 800 to 1200 Hz in a passenger vehicle) generated from a circumferential main groove provided in a tread surface of a tire is reduced by a resonator (so-called Helmholtz resonator) comprising an air chamber portion and a narrowed neck portion (e.g., Patent Literature 1). Reference is also made to EP 0625436, JP 2007-269144 and JP 2017-185889.

### CITATION LIST

### Patent Literature

PTL 1: Japanese Patent Laid-Open No. 2015-171835

### SUMMARY

### (Technical Problem)

However, in general, Helmholtz resonator is provided in a land portion of a tread, a rigidity distribution of the land portion tends to be nonuniform, and uneven wear easily occurs in the tread. Consequently, it is desired that the uneven wear of the tread is suppressed while reducing air column resonance sound.

To solve such a problem, an object of the present invention is to provide a tire in which uneven wear in a tread can be suppressed while reducing air column resonance sound.

### (Solution to Problem)

A tire of the present invention is a tire according to claim 1.

Here, in the present description, "the tread surface" means an outer circumferential surface over an entire circumference of the tire, which comes in contact with a road surface when the tire assembled to a rim and filled with a predetermined internal pressure is rolled in a state of being loaded with a maximum load, and "a tread ground contact edge" means an edge of the tread surface in the tire width direction.

Furthermore, in the present description, "the opening width", "the groove width" or the like refers to a width measured along a direction orthogonal to an extending direction of the groove in the following reference state. Hereinafter, it is considered that dimensions or the like of respective elements of the grooves or the like are measured in the reference state, unless otherwise mentioned.

Furthermore, in the present description, "the reference state" indicates a state where the tire is assembled to the rim, filled with the internal pressure and unloaded.

Note that the above "rim" indicates an approved rim (a measuring rim in Standards Manual of ETRTO, and a design rim in Year Book of TRA) in an applicable size described or to be described in future in an industrial standard effective in a district where the tire is produced and used, for example, JATMA Year Book of JATMA (the Japan Automobile Tyre Manufacturers Association) in Japan, Standards Manual of ETRTO (the European Tyre and Rim Technical Organization) in Europe, Year Book of TRA (the Tire and Rim Association, Inc.) in U.S. or the like (that is, the above "rim" also includes a size that can be included in the above industrial standard in future, in addition to the existing size. Examples of "the size to be described in future" include sizes described as "future developments" in 2013 edition of Standards Manual of ETRTO). However, it is considered that a rim having a size that is not described in the above industrial standard is a rim having a width corresponding to a bead width of the tire. Furthermore, "a predetermined internal pressure" refers to an air pressure (a maximum air pressure) corresponding to a maximum load capability of a single wheel in an applicable size and ply rating described in Year Book of JATMA described above, or the like. "The predetermined internal pressure" having a size that is not described in the above industrial standard refers to an air pressure (the maximum air pressure) corresponding to the maximum load capability prescribed for each vehicle to which the tire is mounted. Additionally, "the maximum load" refers to a load corresponding to the above maximum load capability. Note that air described herein can be replaced with an inert gas such as a nitrogen gas, or the like.

Note that in the present description, "at least a central portion of the auxiliary groove in an extending direction" described above refers to a portion of the auxiliary groove excluding an end portion thereof.

Note that in the present invention, "an extending length" described above refers to a length of a straight line or a curve drawn in an opening center of the auxiliary groove.

### (Advantageous Effect)

According to the present invention, uneven wear in a tread can be suppressed while reducing air column resonance sound.

### BRIEF DESCRIPTION OF THE DRAWINGS

In the accompanying drawings:
FIG. 1 is a partial developed view of a tread surface of a tire according to an embodiment of the present invention;
FIG. 2 is a partial enlarged view of the tread surface illustrated in FIG. 1;
FIG. 3 is a cross-sectional view along the a-a line illustrated in FIG. 2;
FIG. 4 is a cross-sectional view along the b-b line illustrated in FIG. 2;
FIG. 5 is a cross-sectional view along the c-c line illustrated in FIG. 2; and
FIG. 6 is a cross-sectional view along the d-d line illustrated in FIG. 2.

### DETAILED DESCRIPTION

Hereinafter, an embodiment of a tire according to the present invention will be illustrated and described with reference to the drawings.

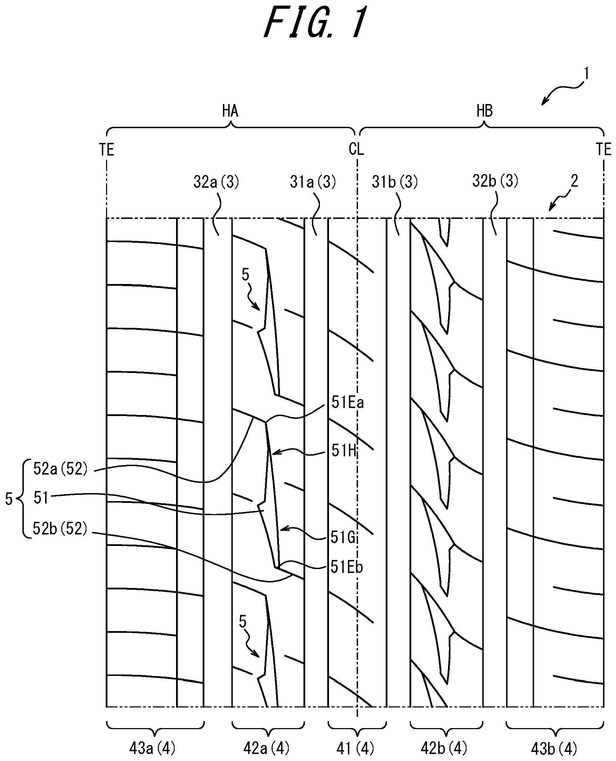

FIG. 1 is a partial developed view illustrating a tread surface 2 of a tire 1 according to the embodiment of the present invention. Although partially omitted from the drawing, the tire 1 of this embodiment comprises a carcass including a radial structure toroidally extending between bead portions, a belt disposed outside the carcass of a tread portion in a tire radial direction, and a tread rubber disposed outside the belt in the tire radial direction to form the tread surface 2.

The tire 1 includes, in the tread surface 2, a plurality of (in the present embodiment, five) land portions 4 partitioned by (in the present embodiment, four) circumferential main grooves 3 continuously extending in a tire circumferential direction on at least one side in a tire width direction, as illustrated in FIG. 1. More specifically, the tread surface 2 is formed with a central land portion 41 partitioned by two circumferential main grooves 31a, 31b adjacent to each other via a tire equator plane CL, an intermediate land portion 42a partitioned by two circumferential main grooves 31a, 32a extending in a tire half portion HA on one side of the tire equator plane CL (in FIG. 1, a paper surface left side), a shoulder land portion 43a partitioned by a ground contact edge TE of the tire half portion HA and the circumferential main groove 32a on a ground contact edge TE side, an intermediate land portion 42b partitioned by two circumferential main grooves 31b, 32b extending in a tire half portion HB on the other side of the tire equator plane CL (in FIG. 1, a paper surface right side), and a shoulder land portion 43b partitioned by a ground contact edge TE of the tire half portion HB and the circumferential main groove 32b on a ground contact edge TE side.

Note that each of the circumferential main grooves 31a, 31b, 32a and 32b in the tire 1 continuously extends linearly along the tire circumferential direction, but in another example, the circumferential main grooves 3 may have a zigzag-shaped or wavy-shaped extending form. Furthermore, each of the land portions 41, 42a, 42b, 43a and 43b in this example is a rib-shaped land portion extending continuously in the tire circumferential direction, but in another example, the land portions 4 may be block land portions or the like.

In the tire 1, the land portion 4 is formed with a resonator (in an illustrated example, Helmholtz resonator) 5 including an auxiliary groove 51 that terminates in the land portion 4, and at least one branch groove 52 (in the present embodiment, two branch grooves) that communicates between the auxiliary groove 51 and the circumferential main groove 3.

More specifically, the resonator 5 of the present embodiment includes the auxiliary groove 51 formed in the intermediate land portion 42a of the tire half portion HA on one side, and includes the auxiliary groove 51 that terminates in the intermediate land portion 42a, a first branch groove 52a that communicates between the auxiliary groove 51 and the circumferential main groove 32a on the tire ground contact edge TE side, and a second branch groove 52b that communicates between the auxiliary groove 51 and the circumferential main groove 31a on the tire equator plane CL side. Alternatively, the tire of the present invention may include a configuration where the resonator only includes one of the first branch groove or the second branch groove. That is, the resonator may be configured to communicate only with the circumferential main groove that partitions the land portion on one side in the tire width direction. Furthermore, the tire of the present invention may include a configuration where the resonator includes three, four or more branch grooves.

In the resonator 5, the auxiliary groove 51 extends in the tire circumferential direction. That is, the auxiliary groove 51 has a shape having a length in the tire circumferential direction that is larger than a length in the tire width direction.

Furthermore, in the resonator 5, the first branch groove 52a is provided adjacent to an end portion 51Ea of the auxiliary groove 51 on one side (in FIG. 1, a paper surface upper side) in the tire circumferential direction, and the second branch groove 52b is provided adjacent to an end portion 51Eb of the auxiliary groove 51 on the other side (in FIG. 1, a paper surface lower side) in the tire circumferential direction. That is, in this example, one end of the first branch groove 52a is opened in the circumferential main groove 32a on the ground contact edge TE side of the tire half portion HA, and the other end of the first branch groove 52a is opened in the end portion 51Ea of the auxiliary groove 51 on one side in the tire circumferential direction. Furthermore, similarly, one end of the second branch groove 52b is opened in the circumferential main groove 31a on the tire equator plane CL side of the tire half portion HA, and the other end of the second branch groove 52b is opened in the end portion 51Eb of the auxiliary groove 51 on the other side in the tire circumferential direction. Alternatively, in the tire of the present invention, the branch groove 52 may be provided in a portion other than a tire circumferential end portion of the auxiliary groove 51, for example, adjacent to a central portion of the auxiliary groove 1 in the tire circumferential direction.

Additionally, in the resonator 5, a groove volume of the auxiliary groove 51 is larger than a groove volume of each of the first branch groove 52a and the second branch groove 52b connected to the auxiliary groove 51. Furthermore, an opening area of the auxiliary groove 51 to the tread surface 2 is larger than an opening area of each of the first branch groove 52a and the second branch groove 52b, connected to the auxiliary groove 51, to the tread surface 2.

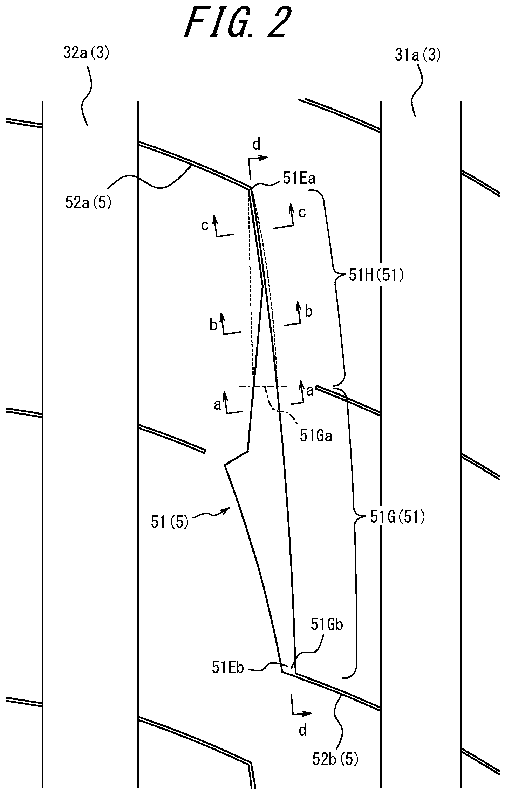

In addition, FIG. 2 is a partial enlarged view of the tread surface 2 illustrated in FIG. 1, and illustrates the resonator 5 and a peripheral part of the resonator 5 in an enlarged manner. In the resonator 5, a hidden groove 51H having an opening width in the tread surface 2 that is smaller than a groove width of a groove bottom is provided in at least a part of the auxiliary groove 51. The drawing illustrates a groove wall of the hidden groove 51H with a broken line. In this embodiment, the hidden groove 51H is provided only in the end portion 51Ea of the auxiliary groove 51 on one side in the tire circumferential direction. The hidden groove 51H extends along an extending direction of the auxiliary groove 51 from the end portion 51Ea of the auxiliary groove 51 on the one side in the tire circumferential direction to a portion having a predetermined ratio to an extending length of the auxiliary groove 51.

In this way, the auxiliary groove 51 in the tire 1 of the present embodiment comprises the hidden groove 51H, and a revealed groove 51G excluding the hidden groove 51H.

Alternatively, in the tire of the present invention, the hidden groove may be provided in the whole auxiliary groove. That is, the auxiliary groove may only comprise the hidden groove. Furthermore, in the tire of the present invention, the hidden grooves may be provided in end portions of the auxiliary groove on both sides in the tire circumferential direction. Hereinafter, description will be made in detail as to the hidden groove 51H and the revealed groove 51G of the auxiliary groove 51 in the tire 1 of the present embodiment.

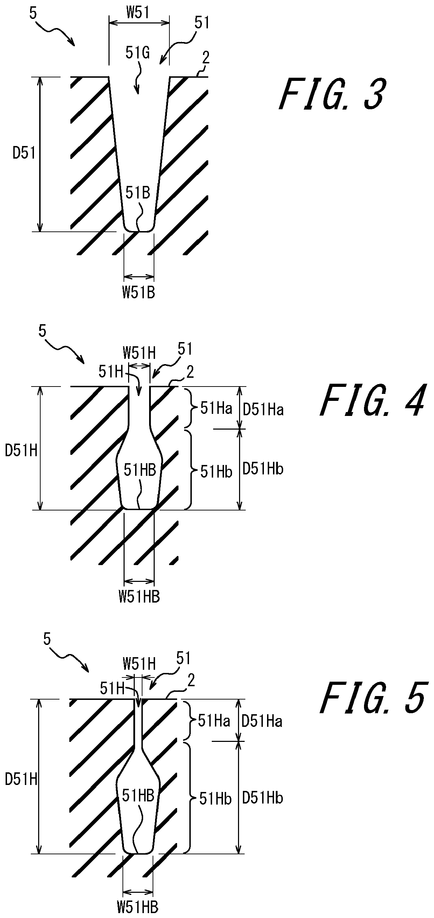

FIGS. 3 to 5 are cross-sectional views of the auxiliary groove 51. That is, FIG. 3 is a cross-sectional view along the a-a line of FIG. 2, FIG. 4 is a cross-sectional view along the b-b line of FIG. 2, and FIG. 5 is a cross-sectional view along the c-c line of FIG. 2. More specifically, FIG. 2 is a cross-sectional view of a plane of the revealed groove 51G of the auxiliary groove 51 that is orthogonal to the extending direction of the auxiliary groove 51, and FIGS. 4, 5 are cross-sectional views of a plane of the hidden groove 51H of the auxiliary groove 51 that is orthogonal to the extending direction of the auxiliary groove 51.

As illustrated in FIG. 3, in the revealed groove 51G of the auxiliary groove 51, an opening width W51 in the tread surface 2 is smaller than a groove depth D51, and larger than or equal to a groove width W51B in a groove bottom 51B.

Furthermore, as illustrated in FIGS. 4, 5, in the hidden groove 51H of the auxiliary groove 51, an opening width W51H in the tread surface 2 is smaller than a groove depth D51H, and smaller than a groove width W51HB in a groove bottom 51HB.

Additionally, the opening width W51H of the hidden groove 51H in the tread surface 2 is smaller than the opening width W51 of the revealed groove 51G in the tread surface 2. In addition, the groove depth D51H of the hidden groove 51H is smaller on a revealed groove 51G side than on a first branch groove 52a side.

Note that the hidden groove 51H in the resonator 5 comprises an opening side portion 51Ha having a groove width maintained on an inner side in the tire radial direction (a groove depth direction) in the same manner as in the opening width W51H in the tread surface 2, and a groove bottom side portion 51Hb having a groove width that is larger than the opening width W51H and continuous in the groove depth direction, in order from a tread surface 2 side in cross-sectional view of the plane that is orthogonal to the extending direction of the auxiliary groove 51 as illustrated in FIGS. 4, 5.

In the resonator 5, the opening side portion 51Ha of the hidden groove 51H has a constant groove width, while the groove width of the groove bottom side portion 51Hb of the hidden groove 51H gradually increases to a vicinity of a middle of the groove bottom side portion 51Hb in a region from the tread surface 2 side toward a groove bottom 51HB side, and then gradually decreases or is maintained constant in a region from the vicinity of the middle of the groove bottom side portion 51Hb to the groove bottom 51HB. That is, the groove bottom side portion 51Hb in this example has a deformed hexagonal shape in cross-sectional view of the plane that is orthogonal to the extending direction of the auxiliary groove 51.

Alternatively, in the resonator of the present invention, the groove bottom side portion 51Hb of the hidden groove 51H may have, in cross-sectional view, a shape (e.g., a circular, elliptic or rhombic shape) in which the groove width gradually increases and gradually decreases from the tread surface 2 side toward a groove bottom 51HB side.

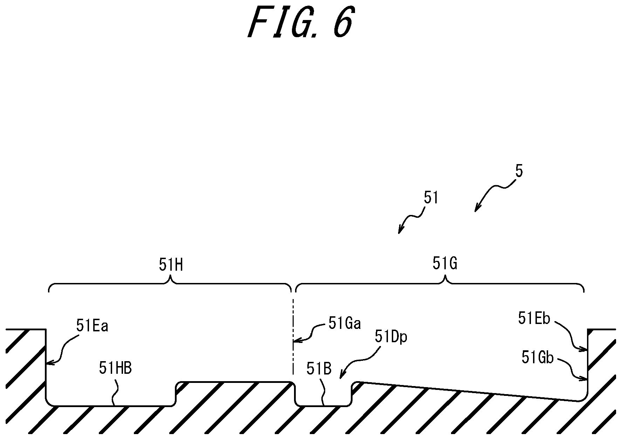

Additionally, FIG. 6 is a cross-sectional view along the d-d line of FIG. 2, and here illustrates a developed cross section along an opening center of the auxiliary groove 51. The auxiliary groove 51 includes a groove deepest portion 51Dp in which a groove depth in the auxiliary groove 51 is maximum, in at least the central portion of the auxiliary groove 51 in the extending direction.

In the resonator 5, the groove deepest portion 51Dp is provided adjacent to an end portion 51Ga of the revealed groove 51G of the auxiliary groove 51 on one side (a hidden groove 51H side of the auxiliary groove 51) in the tire circumferential direction, and the groove depth D51 of the auxiliary groove 51 locally increases in the groove deepest portion 51Dp. Furthermore, in the resonator 5, the groove depth D51 of the auxiliary groove 51 in the revealed groove 51G gradually increases from the groove deepest portion 51Dp toward an end portion 51Gb side of the revealed groove 51G on the other side (a second branch groove 52b side) in the tire circumferential direction. In the resonator 5, the groove deepest portion 51Dp has a locally deepest groove depth; alternatively, the tire of the present invention may include a configuration where the groove depth of the auxiliary groove gradually increases from the end portions of the auxiliary groove on one side and the other side in the tire circumferential direction toward the central portion of the auxiliary groove in the extending direction, to form a groove deepest portion. In this case, it is considered that a portion having a groove depth in excess of twice an average depth of the auxiliary groove 51 is the groove deepest portion.

Furthermore, in the resonator 5, the groove deepest portion 51Dp is provided in the groove bottom of the revealed groove 51G of the auxiliary groove 51, but in another example, the groove deepest portion 51Dp may be provided in a groove bottom of the hidden groove 51H of the auxiliary groove 51 or provided in each of the groove bottoms of both the revealed groove 51G and the hidden groove 51H.

Additionally, in the resonator 5, as illustrated in FIG. 2, the opening width W51 of the revealed groove 51G of the auxiliary groove 51 in the tread surface 2 gradually increases from one end 51Ga of the revealed groove 51G in the tire circumferential direction toward a maximum width position of the revealed groove 51G, and gradually decreases from the maximum width position toward the other end 51Gb of the revealed groove 51G in the tire circumferential direction.

Alternatively, in the resonator of the present invention, in developed view of the tread surface 2, the revealed groove 51G may be formed in a shape in which the opening width of the revealed groove 51G in the tread surface 2 is constant along an extending length of the revealed groove 51G, a shape in which the opening width gradually increases or gradually decreases from one end toward the other end of the revealed groove 51G, a shape in which the opening width repeats increasing and decreasing at a constant pitch, a shape in which the opening width irregularly increases and decreases, or the like.

Subsequently, operations and effects by the tire 1 according to this embodiment will be described.

As described above, in the tire 1, the land portions 4 (in the present embodiment, the intermediate land portion 42a) is formed with the resonator 5 including the auxiliary groove 51 that terminates in the land portion 42a, and at least one branch groove 52 that communicates between the auxiliary groove 51 and the circumferential main groove 3 (in the present embodiment, two branch grooves of the first branch groove 52a that communicates between the auxiliary groove 51 and the circumferential main groove 32a, and the second branch groove 52b that communicates between the auxiliary groove 51 and the circumferential main groove 31a). Consequently, air column resonance sound generated in the circumferential main grooves 31a, 32a can be reduced by the resonator 5.

Furthermore, in the tire 1, the hidden groove 51H having the opening width in the tread surface 2 that is smaller than the groove width of the groove bottom is provided in at least a part of the auxiliary groove 51. In the hidden groove 51H, the opening width W51H in the tread surface 2 is smaller than the groove width W51HB of the groove bottom 51HB. Consequently, excessive decrease in rigidity of the land portion due to the resonator 5 provided in the tread surface 2 can be suppressed, and hence uneven wear in a tread can be suppressed.

Additionally, in the resonator 5 including this configuration, an air chamber volume can be sufficiently acquired on the groove bottom 51HB side of the hidden groove 51H, and hence the uneven wear in the tread can be suppressed while maintaining a frequency band of the resonator 5 in a range effective for the reduction of the air column resonance sound. Furthermore, in the tire 1 comprising the resonator 5, it is hard to decrease rigidity of the land portion 4 formed with the resonator 5 (in the present embodiment, the intermediate land portion 4a), and hence steering stability in a cornering situation can improve.

Furthermore, in the tire 1, the hidden groove 51H is provided with the opening side portion 51Ha having the groove width maintained on the inner side in the tire radial direction (the groove depth direction) in the same manner as in the opening width W51H in the tread surface 2. Consequently, the uneven wear in the tread around the resonator 5 can be more reliably suppressed.

Additionally, in the tire 1, the auxiliary groove 51 comprises the hidden groove 51H, and the revealed groove 51G excluding the hidden groove 51H. According to this configuration, as compared with a configuration where the auxiliary groove 51 only comprises the hidden groove 51H, a comparatively large groove volume of the auxiliary groove 1 can be acquired, and hence a drainage performance of the tire 1 can improve. Furthermore, a comparatively large opening area of the auxiliary groove 51 in the tread surface 2 can be acquired, and hence stone-trapping resistance or the like of the tire 1 can improve.

Note that in the tire of the present invention, the auxiliary groove 51 may only comprise the hidden groove 51H. In this case, it is harder to decrease the rigidity of the land portion provided with the resonator 5, and hence the uneven wear in the tread can be further reliably suppressed.

Furthermore, in the tire 1, the hidden groove 51H is provided only in the end portion 51Ea of the auxiliary groove 51 on one side in the tire circumferential direction. According to this configuration, during rolling of the loaded tire, the hidden groove 51H functions as a pump (i.e., during the rolling of the loaded tire, the groove wall of the hidden groove 51H collapses, to push air or water out of the auxiliary groove 1), and water that enters the auxiliary groove 51 can be efficiently discharged, so that the drainage performance of the tire 1 can improve.

Additionally, in the tire 1, the hidden groove 51H is provided only in the end portion 51Ea of the auxiliary groove 51 on one side in the tire circumferential direction, and the branch groove 52 (in the present embodiment, the first branch groove 52a) is provided adjacent to the end portion 51Ea of the auxiliary groove 51 on one side in the tire circumferential direction. In this configuration, opposite sides of the hidden groove 51 in the tire circumferential direction are opened in the tread surface 2, and hence the groove wall of the hidden groove 51 is more appropriately easier to collapse. Consequently, a pump effect in the hidden groove 51 described above can be more suitably obtained, and the drainage performance of the tire 1 can further improve.

Note that in the tire of the present invention, the hidden groove 51H may be provided in each of the end portion 51Ea of the auxiliary groove 51 on one side in the tire circumferential direction and the end portion 51Eb on the other side in the tire circumferential direction. In this case, it is easy to suitably maintain the rigidity of the land portion 4 formed with the resonator 5, but it may be hard to sufficiently acquire the groove volume of the auxiliary groove 51. Consequently, it is preferable that the hidden groove 51H is provided only in either of the end portion 51Ea of the auxiliary groove 51 on one side in the tire circumferential direction or the end portion 51Eb on the other side in the tire circumferential direction.

Furthermore, in the tire 1, the opening width W51 of the revealed groove 51G in the tread surface 2 gradually increases from one end of the revealed groove 51G in the tire circumferential direction toward the maximum width position of the revealed groove 51G, and gradually decreases from the maximum width position toward the other end of the revealed groove 51G in the tire circumferential direction. In this case, during the rolling of the loaded tire, a groove width 51 of the central portion of the auxiliary groove 51 in the tire circumferential direction easily changes, and water that enters the auxiliary groove 51 can be efficiently discharged, so that the drainage performance can further improve.

Additionally, in the tire 1, the auxiliary groove 51 includes the groove deepest portion 51Dp in which the groove depth D51 in the auxiliary groove 51 is maximum, in at least the central portion of the auxiliary groove 51 in the extending direction. Thus, the groove deepest portion 51Dp is provided, so that the groove volume of the auxiliary groove 51 can be easily acquired. Consequently, the drainage performance can further improve.

Note that in a case where the groove deepest portion 51Dp is configured so that the depth of the auxiliary groove 51 locally increases in the groove deepest portion 51Dp as in the tire 1 of the present embodiment, it is easier to maintain the rigidity of the land portion provided with the resonator 5 (in the present embodiment, the intermediate land portion 42a), and it is possible to more reliably suppress the uneven wear in the tread, as compared with a case where the groove deepest portion 51Dp is configured so that the depth of the auxiliary groove 51 gradually decreases.

Furthermore, in the tire 1, it is preferable that a ratio of the extending length of the hidden groove 51H to an extending length of the auxiliary groove 51 in developed view of the tread surface 2 is 0.15 or more and 0.75 or less. If the ratio is 0.15 or more, the rigidity of the intermediate land portion 42a provided with the resonator 5 can be suitably maintained, and the uneven wear in the tread can be more reliably suppressed. Furthermore, if the ratio is 0.75 or less, the groove volume of the auxiliary groove 51 of the resonator 5 can be sufficiently acquired, and the drainage performance can further improve.

Note that from a viewpoint of further improving the drainage performance while more reliably suppressing the uneven wear in the tread, the ratio of the extending length of the hidden groove 51H to the extending length of the auxiliary groove 51 in developed view of the tread surface 2 is more preferably 0.30 or more and 0.60 or less, and further preferably 0.35 or more and 0.55 or less.

Note that in the tire of the present invention, it is preferable that the opening width of the hidden groove 51H of the auxiliary groove 51 in the tread surface 2 is 0.2 mm or more and 1.0 mm or less. If the opening width is 0.2 mm or more, it is easy to extract a mold to mold the hidden groove 51H of the auxiliary groove 51 during manufacturing of the tire. If the opening width is 1.0 mm or less, it is easy to close the auxiliary groove 51 at an opening end of the hidden groove 51H during ground contact of the tire. Furthermore, the groove walls that partition the hidden groove 51H support each other, and hence the rigidity of the intermediate land portion 42a formed with the resonator 5 (especially, shearing rigidity) can be more suitably maintained.

Furthermore, it is preferable that in the tire of the present invention, a groove depth (a length along a normal line direction of the tread surface T) D51Ha of the opening side portion 51Ha of the hidden groove 51H of the auxiliary groove 51 is 1.0 mm or more and 4.0 mm or less. If the groove depth is 1.0 mm or more, rigidity in the opening side portion 51Ha can be more suitably acquired. Furthermore, if the groove depth is 4.0 mm or less, a groove depth D51Hb of the groove bottom side portion 51Hb is sufficiently provided, and the groove volume of the auxiliary groove 51 can be easily acquired.

Additionally, in the tire 1 according to the present embodiment, a plurality of resonators 5 described above are arranged in the intermediate land portion 42a via an equal space in the tire circumferential direction. Consequently, the air column resonance sound can be reduced in the tire circumferential direction, and the uneven wear in the tread can be suppressed.

Note that in the illustrated example, the resonator 5 described above is provided only in the intermediate land portion 42a, but in the tire of the present invention, the resonator 5 described above may be provided also in the other land portion 4. In this case, the air column resonance sound in the other circumferential main groove 3 with which the resonator 5 communicates is also reduced, and hence a sum of the air column resonance sound generated in the tire can be reduced.

Here, in the vehicle-installed inside half portion HA, it is preferable that a ground contact width of the internal shoulder land portion 43a (a tire widthwise distance between ground contact ends of a contact patch when the tire is mounted to an applicable rim, filled with a prescribed internal pressure, and loaded with a maximum load) is smaller than a ground contact width of the internal intermediate land portion 42a.

Furthermore, in the vehicle-installed outside half portion HB, it is preferable that a ground contact width of the external shoulder land portion 43b is smaller than a ground contact width of the external intermediate land portion 42b.

Additionally, in case where the central land portion 41 is formed as in the embodiment illustrated in FIG. 1, it is preferable that a ground contact width of the central land portion 41 is minimum among the plurality of land portions.

The groove width of the internal circumferential main groove 32a located on an outermost side in the tire width direction is maximum among the plurality of circumferential main grooves. This is because it is easy to increase a ground contact length on a vehicle-installed inside during running, and such easiness noticeably contributes to a hydroplaning performance and can therefore effectively improve the hydroplaning performance.

In the present invention, for an edge length per unit area in the tire width direction, it is preferable that an edge length per unit area of the external shoulder land portion 43b in the tire width direction is larger than an edge length per unit area of the internal shoulder land portion 43a in the tire width direction.

Furthermore, for the edge length per unit area in the tire width direction, it is preferable that an edge length per unit area of the external intermediate land portion 42b in the tire width direction is larger than an edge length per unit area of the internal intermediate land portion 42a in the tire width direction.

Additionally, for an edge length per unit area in the tire circumferential direction, it is preferable that an edge length per unit area of the internal shoulder land portion 43a in the tire circumferential direction is larger than an edge length per unit area of the external shoulder land portion 43b in the tire circumferential direction.

This is because the ground contact length can be optimized, the performance of the resonator can be more effectively exhibited, and quietness can be further improved.

### EXAMPLES

Hereinafter, examples of the present invention will be described, but the present invention is not limited to the following examples.

Example Tire and Comparative Example Tire (both had a tire size of 215/55R17) were experimentally produced under specifications illustrated in Table 1, and reduction effect of air column resonance sound (quietness) and uneven wear resistance were evaluated.

Example Tire 1 has a tread pattern illustrated in FIG. 1, and comprises a resonator illustrated in FIGS. 1 to 5.

Comparative Example Tire 1 is a tire similar to Example Tire 1 except that the tire does not comprise a resonator in a land portion.

Comparative Example Tire 2 is a tire similar to Example Tire 1 except that the tire comprises a conventional resonator in a land portion (does not include a hidden groove in an auxiliary groove).

Example Tire 2 is a tire similar to Example Tire 1 except that an auxiliary groove of a resonator only comprises a hidden groove.

Example Tire 3 is a tire similar to Example Tire 1 except that a hidden groove of an auxiliary groove of a resonator is provided in a central portion of the auxiliary groove.

Example Tire 4 is a tire similar to Example Tire 1 except that a hidden groove is provided in each end portion of an auxiliary groove in a tire circumferential direction.

Example Tire 5 is a tire similar to Example Tire 1 except that a branch groove is not provided adjacent to one end portion of an auxiliary groove in a tire circumferential direction.

Example Tire 6 is a tire similar to Example Tire 1 except that a shape of a revealed groove in a tread surface is rectangular.

Example Tire 7 is a tire similar to Example Tire 1 except that the tire does not include a groove deepest portion in an auxiliary groove.

Example Tire 8 is a tire similar to Example Tire 1 except that a groove deepest portion in an auxiliary groove is formed so that a groove depth of the auxiliary groove gradually increases.

Each of Example Tires 9 to 12 is a tire similar to Example Tire 1 except that a ratio of an extending length of a hidden groove to an extending length of an auxiliary groove is different.

### (Reduction Effect of Air Column Resonance Sound)

Each sample tire was assembled to a rim 7.5J to form a tire wheel. When the tire was applied with an air pressure of 230 kPa (an equivalent pressure) and a tire load of 4.46 kN and was run at a speed of 80 km/h on an indoor drum test machine, tire side sound was measured on conditions determined in accordance with JASO C606 standards. Then, a partial overall value in a 1/3 octave center frequency 800-1000-1250 Hz band was computed, and air column resonance sound was calculated. Table 1 illustrates the results with a reduction amount (%) of the air column resonance sound to Comparative Example Tire 1. A larger percentage indicates a larger reduction amount of the air column resonance sound.

### (Uneven Wear Resistance)

Each sample tire was assembled to a rim 7.5J to form a tire wheel, and the tire was applied with an air pressure of 230 kPa (an equivalent pressure) and a tire load of 4.46 kN, and was run as much as 10000 km at a speed of 80 km/h on an indoor drum test machine. Afterward, a worn state of a tread surface was visually confirmed. Table 1 illustrates the results. An uneven wear resistance of Comparative Example Tire 1 evaluated by an uneven wear amount was regarded as 1, and evaluation in five stages was performed. A larger numeric value indicates more excellency in uneven wear resistance.

### (Drainage Performance)

Each sample tire was assembled to a rim (7.5J) to form a wheel, and the tire was filled with an air pressure of 230 kPa (an equivalent pressure) and installed in a passenger vehicle. Afterward, the vehicle accelerated from a slow state in an evaluation course where water was sprayed over a paved road surface until a water depth reached 7 mm, and a vehicle speed when a slip rate of the tire reached 10% (a speed when the tire span on water) was obtained, to evaluate a drainage performance (an anti-hydroplaning performance). Table 1 illustrates the results. The drainage performance of Comparative Example Tire 1 by the above vehicle speed was regarded as 100, and drainage performances of the other tires were indexed and evaluated. A larger numeric value indicates more excellency in drainage performance.

**[Table 1]**

| | Presence of resonator | Ratio of extending length of hidden groove to extending length of auxiliary groove (%) | Position of hidden groove in auxiliary groove | Position of branch groove to auxiliary groove | Shape of revealed groove | Shape of groove deep portion | Quietness (air column resonance sound reduction amount (dB)) | Reduction amount (%) | Uneven wear resistance (INDEX) | Drainage performance (INDEX) |
|---|---|---|---|---|---|---|---|---|---|---|
| Example Tire 1 | Present | 45 | One side end portion | Both side end portions | Almost rhombic | Local | 1.5 | -29% | 7 | 107 |
| Comparative Example Tire 1 | None | - | - | - | - | - | 0 | 0% | 10 | 100 |
| Comparative Example Tire 2 | Present | 0 | - | Both side end portions | Almost parallelogram | - | 1.5 | -29% | 2 | 105 |
| Example Tire 2 | Present | 100 | One side end portion | Both side end portions | Almost rhombic | Local | 1.5 | -29% | 8 | 101 |
| Example Tire 3 | Present | 45 | Central portion | Both side end portions | Almost rhombic | Local | 1.5 | -29% | 6 | 105 |
| Example Tire 4 | Present | 90 | Both side end portions | Both side end portions | Almost rhombic | Local | 1.5 | -29% | 8 | 102 |
| Example Tire 5 | Present | 45 | One side end portion | Central portion | Almost rhombic | Local | 1.5 | -29% | 5 | 106 |
| Example Tire 6 | Present | 45 | One side end portion | Both side end portions | Rectangular | Local | 1.5 | -29% | 5 | 106 |
| Example Tire 7 | Present | 45 | One side end portion | Both side end portions | Almost rhombic | - | 1.5 | -29% | 5 | 106 |
| Example Tire 8 | Present | 45 | One side end portion | Both side end portions | Almost rhombic | Non-local | 1.5 | -29% | 5 | 107 |
| Example Tire 9 | Present | 10 | One side end portion | Both side end portions | Almost rhombic | Local | 1.5 | -29% | 2 | 105 |
| Example Tire 10 | Present | 15 | One side end portion | Both side end portions | Almost rhombic | Local | 1.5 | -29% | 3 | 105 |
| Example Tire 11 | Present | 75 | One side end portion | Both side end portions | Almost rhombic | Local | 1.5 | -29% | 7 | 103 |
| Example Tire 12 | Present | 80 | One side end portion | Both side end portions | Almost rhombic | Local | 1.5 | -29% | 7 | 102 |

### REFERENCE SIGNS LIST

1 tire
2 tread surface
3, 31a, 31b, 32a and 32b circumferential main groove
4 land portion
41 central land portion
42a and 42b intermediate land portion
43a and 43b shoulder land portion
5 resonator
51 auxiliary groove
51Ea end portion of the auxiliary groove on one side in a tire circumferential direction
51Eb end portion of the auxiliary groove on the other side in the tire circumferential direction
51Dp groove deepest portion
51G revealed groove
51H hidden groove
52 branch groove
52a first branch groove
52b second branch groove
CL tire equator plane
HA tire half portion on one side
HB tire half portion on the other side
TE tread edge

## Claims

1. A tire (1) including, in a tread surface (2), a plurality of land portions (4) partitioned by a plurality of circumferential main grooves (3, 31a, 31b, 32a, 32b) extending continuously in a tire circumferential direction on at least one side in a tire width direction, and comprising, in one of the land portions (4), a resonator (5) including an auxiliary groove (51) that terminates in the land portion (4), and at least one branch groove (52) that communicates between the auxiliary groove (51) and one of the circumferential main grooves (3, 31a, 31b, 32a, 32b), wherein a hidden groove (51H) having an opening width in the tread surface (2) that is smaller than a groove width of a groove bottom is provided in at least a part of the auxiliary groove (51), wherein
the auxiliary groove (51) comprises the hidden groove (51H), and a revealed groove (51G) excluding the hidden groove (51H),
the hidden groove (51H) comprises an opening side portion (51Ha) having a groove width maintained on an inner side in the tire radial direction in the same manner as in the opening width (W51H) in the tread surface (2), and a groove bottom side portion (51Hb) having a groove width that is larger than the opening width (W51H) and continuous in the groove depth direction, in order from a tread surface (2) side in cross-sectional view of the plane that is orthogonal to the extending direction of the auxiliary groove (51),
the opening side portion (51Ha) of the hidden groove (51H) has a constant groove width, while the groove width of the groove bottom side portion (51Hb) of the hidden groove (51H) gradually increases to a vicinity of a middle of the groove bottom side portion (51Hb) in a region from the tread surface (2) side toward a groove bottom (51HB) side, and then gradually decreases or is maintained constant in a region from the vicinity of the middle of the groove bottom side portion (51Hb) to the groove bottom (51HB), and
an extension length in the tire radial direction of the opening side of the hidden groove (51H) is shorter than that of the groove bottom (51HB) side, **characterized in that**
the tire (1) includes a vehicle-installed inside half portion (HA) and a vehicle-installed outside half portion (HB), and the groove width of the circumferential main groove (32a) that is located in the vehicle-installed inside half portion (HA) and is on a vehicle-installed innermost side is maximum among the plurality of circumferential main grooves (3, 31a, 31b, 32a, 32b).

2. The tire (1) according to claim 1, wherein the hidden groove (51H) is provided only in an end portion of the auxiliary groove (51) on one side in the tire circumferential direction.

3. The tire (1) according to claim 2, wherein the branch groove (52) is provided adjacent to the end portion of the auxiliary groove (51) on one side in the tire circumferential direction.

4. The tire (1) according to claim 2 or 3, wherein an opening width of the revealed groove (51G) in the tread surface (2) gradually increases from one end of the revealed groove (51G) in the tire circumferential direction toward a maximum width position of the revealed groove (51G), and gradually decreases from the maximum width position toward the other end of the revealed groove (51G) in the tire circumferential direction.

5. The tire (1) according to any one of claims 1 to 4, including a groove deepest portion (51Dp) in which a groove depth in the auxiliary groove (51) is maximum, in at least a central portion of the auxiliary groove (51) in an extending direction.

6. The tire (1) according to any one of claims 1 to 5, wherein a ratio of an extending length of the hidden groove (51H) to an extending length of the auxiliary groove (51) in developed view of the tread surface (2) is 0.15 or more and 0.75 or less.

## Patentansprüche

1. Reifen (1), der, in einer Lauffläche (2), eine Vielzahl von Stegabschnitten (4) einschließt, die durch eine Vielzahl von umlaufenden Hauptrillen (3, 31a, 31b, 32a, 32b) unterteilt ist, die sich durchgehend in einer Reifenumfangsrichtung auf mindestens einer Seite in einer Reifenbreitenrichtung erstrecken, und, in einem der Stegabschnitte (4), einen Resonator (5) umfasst, der eine Nebenrille (51), die in dem Stegabschnitt (4) endet, und mindestens eine Zweigrille (52), die zwischen der Nebenrille (51) und einer der umlaufenden Hauptrillen (3, 31a, 31b, 32a, 32b) verbindet, einschließt, wobei eine verborgene Rille (51H), die eine Öffnungsbreite in der Lauffläche (2) aufweist, die kleiner ist als eine Rillenbreite einer Rillensohle, in mindestens einem Teil der Nebenrille (51) bereitgestellt ist, wobei
die Nebenrille (51) die verborgene Rille (51H) und eine offengelegte Rille (51G) ausschließlich der verborgenen Rille (51H) umfasst,
die verborgene Rille (51H) einen Öffnungsseitenabschnitt (51Ha), der eine Rillenbreite aufweist, die auf einer in der Reifenradialrichtung inneren Seite auf die gleiche Weise beibehalten wird wie bei der Öffnungsbreite (W51H) in der Lauffläche (2), und einen Rillensohlenseitenabschnitt (51Hb) umfasst, der eine Rillenbreite aufweist, die größer als die Öffnungsbreite (W51H) und in der Rillentiefenrichtung durchgehend ist, der Reihe nach von einer Seite der Lauffläche (2) aus in einer Querschnittsansicht der Ebene, die senkrecht zu der Ausdehnungsrichtung der Nebenrille (51) ist,
der Öffnungsseitenabschnitt (51Ha) der verborgenen Rille (51H) eine konstante Rillenbreite aufweist, während die Rillenbreite des Rillensohlenseitenabschnitts (51Hb) der verborgenen Rille (51H) bis zu einer Nähe einer Mitte des Rillensohlenseitenabschnitts (51Hb) in einem Bereich von der Seite der Lauffläche (2) hin zu einer Seite der Rillensohle (51HB) allmählich zunimmt und dann in einem Bereich von der Nähe der Mitte des Rillensohlenseitenabschnitts (51Hb) bis zu der Rillensohle (51HB) allmählich abnimmt oder konstant gehalten wird, und
eine Ausdehnungslänge in der Reifenradialrichtung der Öffnungsseite der verborgenen Rille (51H) kürzer ist als diejenige der Seite der Rillensohle (51HB), **dadurch gekennzeichnet, dass**
der Reifen (1) einen am Fahrzeug installierten inneren halben Abschnitt (HA) und einen am Fahrzeug installierten äußeren halben Abschnitt (HB) einschließt, und die Rillenbreite der umlaufenden Hauptrille (32a), die sich in dem am Fahrzeug installierten inneren halben Abschnitt (HA) befindet und sich auf einer am Fahrzeug installierten innersten Seite befindet, unter der Vielzahl von umlaufenden Hauptrillen (3, 31a, 31b, 32a, 32b) maximal ist.

2. Reifen (1) nach Anspruch 1, wobei die verborgene Rille (51H) nur in einem Endabschnitt der Nebenrille (51) auf einer Seite in der Reifenumfangsrichtung bereitgestellt ist.

3. Reifen (1) nach Anspruch 2, wobei die Zweigrille (52) angrenzend an den Endabschnitt der Nebenrille (51) auf einer Seite in der Reifenumfangsrichtung bereitgestellt ist.

4. Reifen (1) nach Anspruch 2 oder 3, wobei eine Öffnungsbreite der offengelegten Rille (51G) in der Lauffläche (2) von einem Ende der offengelegten Rille (51G) in der Reifenumfangsrichtung hin zu einer Position maximaler Breite der offengelegten Rille (51G) allmählich zunimmt und von der Position maximaler Breite hin zu dem anderen Ende der offengelegten Rille (51G) in der Reifenumfangsrichtung allmählich abnimmt.

5. Reifen (1) nach einem der Ansprüche 1 bis 4, der einen tiefsten Rillenabschnitt (51Dp), in dem eine Rillentiefe in der Nebenrille (51) maximal ist, in mindestens einem mittleren Abschnitt der Nebenrille (51) in einer Ausdehnungsrichtung einschließt.

6. Reifen (1) nach einem der Ansprüche 1 bis 5, wobei ein Verhältnis einer Ausdehnungslänge der verborgenen Rille (51H) zu einer Ausdehnungslänge der Nebenrille (51) in einer abgewickelten Ansicht der Lauffläche (2) 0,15 oder mehr und 0,75 oder weniger beträgt.

## Revendications

1. Bandage pneumatique (1) incluant, dans une surface de bande de roulement (2), une pluralité de parties d'appui (4) divisées par une pluralité de rainures circonférentielles principales (3, 31a, 31b, 32a, 32b) s'étendant en continu dans une direction circonférentielle du bandage pneumatique, sur au moins un côté, dans une direction de la largeur du bandage pneumatique, et comprenant, dans une des parties d'appui (4), un résonateur (5) incluant une rainure auxiliaire (51) qui se termine dans la partie d'appui (4), et au moins une rainure de ramification (52) qui établit une communication entre la rainure auxiliaire (51) et une des rainures circonférentielles principales (3, 31a, 31b, 32a, 32b), dans lequel une rainure cachée (51H) ayant une largeur d'ouverture dans la surface de bande de roulement (2) inférieure à une largeur de rainure d'un fond de rainure, est disposée dans au moins une partie de la rainure auxiliaire (51), dans lequel :
la rainure auxiliaire (51) comprend la rainure cachée (51H), et une rainure apparente (51G) excluant la rainure cachée (51H),
la rainure cachée (51H) comprend une partie latérale d'ouverture (51Ha) ayant une largeur de rainure maintenue sur un côté interne, dans la direction radiale du bandage pneumatique, de la même manière que dans la largeur d'ouverture (W51H) dans la surface de bande de roulement (2), et une partie latérale du fond de rainure (51Hb) ayant une largeur de rainure supérieure à la largeur d'ouverture (W51H) et étant continue dans la direction de la largeur de la rainure, dans l'ordre depuis un côté de la surface de bande de roulement (2) dans une vue en section transversale du plan qui est orthogonal à la direction d'extension de la rainure auxiliaire (51),
la partie latérale d'ouverture (51Ha) de la rainure cachée (51H) a une largeur de rainure constante, alors que la largeur de rainure de la partie latérale du fond de rainure (51Hb) de la rainure cachée (51H) est accrue progressivement vers un voisinage d'un milieu de la partie latérale du fond de rainure (51Hb), dans une région allant du côté de la surface de bande de roulement (2) vers un côté du fond de rainure (51HB), avant d'être réduite progressivement ou d'être maintenue constante dans une région allant du voisinage du milieu de la partie latérale du fond de rainure (51Hb) vers le fond de rainure (51HB), et
une longueur d'extension, dans la direction radiale du bandage pneumatique, du côté d'ouverture de la rainure cachée (51H) est plus courte que celle du côté du fond de rainure (51HB), **caractérisé en ce que** :
le bandage pneumatique (1) inclut une demi-partie intérieure installée sur le véhicule (HA) et une demi-partie extérieure installée sur le véhicule (HB), et la largeur de rainure de la rainure circonférentielle principale (32a) qui se trouve dans la demi-partie intérieure installée sur le véhicule (HA) et se situe sur un côté interne extrême installé sur le véhicule, est maximale parmi la pluralité de rainures circonférentielles principales (3, 31a, 31b, 32a, 32b).

2. Bandage pneumatique (1) selon la revendication 1, dans lequel la rainure cachée (51H) est fournie uniquement dans une partie d'extrémité de la rainure auxiliaire (51), sur un côté dans la direction circonférentielle du bandage pneumatique.

3. Bandage pneumatique (1) selon la revendication 2, dans lequel la rainure de ramification (52) est fournie de manière adjacente à la partie d'extrémité de la rainure auxiliaire (51), sur un côté dans la direction circonférentielle du bandage pneumatique.

4. Bandage pneumatique (1) selon les revendications 2 ou 3, dans lequel une largeur d'ouverture de la rainure apparente (S1G) dans la surface de bande de roulement (2) est accrue progressivement d'une extrémité de la rainure apparente (51G), dans la direction circonférentielle du bandage pneumatique, vers une position à largeur maximale de la rainure apparente (S1G), et est réduite progressivement de la position à largeur maximale vers l'autre extrémité de la rainure apparente (51G), dans la direction circonférentielle du bandage pneumatique.

5. Bandage pneumatique (1) selon l'une quelconque des revendications 1 à 4, incluant une partie à profondeur de rainure maximale (51Dp), dans laquelle une profondeur de rainure dans la rainure auxiliaire (51) est maximale, dans au moins une partie centrale de la rainure auxiliaire (51), dans une direction d'extension.

6. Bandage pneumatique (1) selon l'une quelconque des revendications 1 à 5, dans lequel un rapport entre une longueur d'extension de la rainure cachée (51H) et une longueur d'extension de la rainure auxiliaire (51), dans une vue développée de la surface de bande de roulement (2), est de 0,15 ou plus et de 0,75 ou moins.
